# EUROPÄISCHE PATENTSCHRIFT

(11) **EP 3 827 185 B1**
(45) Veröffentlichungstag und Bekanntmachung des Hinweises auf die Patenterteilung: **30.11.2022**
(21) Anmeldenummer: 19742522.6
(22) Anmeldetag: 11.07.2019
(51) Int. Cl.: F16H 57/031

(54) **GETRIEBEMOTOR**
GEARED MOTOR
MOTO-RÉDUCTEUR

(30) Priorität: 24.07.2018 DE 102018005801
(43) Veröffentlichungstag der Anmeldung: 02.06.2021
(73) Patentinhaber: SEW-EURODRIVE GmbH & Co. KG, 76646 Bruchsal (DE)
(72) Erfinder: MORITZ, Thorsten, 76698 Ubstadt-Weiher (DE); WIECZOREK, Dorothee, 74015 Bretten (DE)
(86) Internationale Anmeldenummer: PCT/EP2019/025228
(87) Internationale Veröffentlichungsnummer: WO 2020/020487

(56) Entgegenhaltungen:
- DE-A1-102007 014 707
- DE-A1-102013 012 718
- DE-A1-102017 001 023

## Beschreibung

Die Erfindung betrifft einen Getriebemotor.

Es ist allgemein bekannt, dass beim Druckgussverfahren zur Herstellung metallischer Teile beim Entformen Schieber linear bewegt, also herausgezogen werden

### Aus der DE 10 2013 012718 A1 ist als nächstliegender Stand der Technik ein Getriebe mit einem Gehäuseteil bekannt.

### Aus der DE 10 2007 014707 A1 ist ein Getriebe bekannt.

### Aus der DE 10 2017 001023 A1 ist ein Getriebe mit Gehäuse bekannt.

Der Erfindung liegt daher die Aufgabe zugrunde, einen Getriebemotor möglichst kompakt weiterzubilden.

Erfindungsgemäß wird die Aufgabe bei dem Getriebemotor nach den in Anspruch 1 angegebenen Merkmalen gelöst.

Von Vorteil ist dabei, dass das mit dem Ritzel der eintreibenden Welle im Eingriff stehende Tellerrad zumindest teilweise in den Kanal hineinragt, insbesondere mehr als die Hälfte des Tellerrads in den Kanal hineinragt. Auf diese Weise ist das Getriebe sehr kompakt ausführbar.

Bei einer vorteilhaften Ausgestaltung ist das Getriebe ein Winkelgetriebe,
wobei eine mit der eintreibenden Welle drehfest verbunden Verzahnung, insbesondere eines Ritzels, mit der Verzahnung eines Tellerrads im Eingriff ist, wobei das Tellerrad mit einer ersten Zwischenwelle des Getriebes drehfest verbunden ist,
wobei die senkrechte Projektion der Drehachse der ersten Zwischenwelle auf die Ziehrichtung, insbesondere auf eine die Ziehrichtung enthaltende Ebene, in demjenigen Bereich enthalten ist, welcher von der senkrechten Projektion des Kanals auf die Ziehrichtung, insbesondere auf die die Ziehrichtung enthaltende Ebene, überdeckt ist. Von Vorteil ist dabei, dass das Tellerrad zu mehr als der Hälfte in den Kanal hineinragt.

Bei einer vorteilhaften Ausgestaltung ist der lichte Durchmesser des Kanals größer ist als der größte Außendurchmesser des Tellerrads. Von Vorteil ist dabei, dass der Kanal breit genug für eine zumindest teilweise Aufnahme des Tellerrads ist.

Bei einer vorteilhaften Ausgestaltung weist das Gehäuseteil einen in einer zweiten Ziehrichtung, insbesondere mit einem zweiten Schieber, entformten Bereich auf, wobei die zweite Ziehrichtung zur Normalenrichtung der von der Drehachse der eintreibenden Welle und der Drehachse der ersten Zwischenwelle aufgespannten Ebene einen nicht verschwindenden Winkel aufweist, insbesondere dessen Betrag zwischen 5° und 45°, insbesondere zwischen 5° und 20°, beträgt. Von Vorteil ist dabei, dass der Getriebedeckel kürzer ausführbar ist, der Innenraumbereich des Getriebes kleiner auslegbar ist, so dass weniger Schmieröl im Getriebe notwendig ist, weil die Gehäusewandung des Gehäuseteils näher an den Verzahnungsteilen verläuft.

Bei einer vorteilhaften Ausgestaltung geht der Kanal durch einen Flanschbereich des Getriebes durch,
insbesondere wobei das Getriebe am Flanschbereich mit dem Elektromotor verbunden ist. Von Vorteil ist dabei, dass das Getriebe über den abtriebsseitigen Flanschbereich an einem nicht drehbar angeordneten Bereich der anzutreibenden Last befestigt wird und somit keine Fußflächen notwendig sind und/oder zu bearbeiten sind. Der Abtriebsseitig Flanschbereich fungiert somit auch als Drehmomentstütze.

Bei einer vorteilhaften Ausgestaltung ist eine Flachdichtung zwischen Gehäuseteil und Getriebedeckel angeordnet ist. Von Vorteil ist dabei, dass die Schrauben wenig Raumbereich in der Wandung des Gehäuseteils beanspruchen, also die Wandstärke im Bereich der für die Schrauben vorgesehenen Gewindebohrungen im Gehäuseteil möglichst klein ist. Denn die Ziehrichtung der Wandung des Gehäuseteils ist parallel zur Schraubachsrichtung der Schrauben. Nachteilig ist hierbei, dass die Schrauben nicht senkrecht durch die Verbindungsfläche geführt sind sondern die Gewindebohrung entsprechend schräg zur Verbindungsfläche ins Gehäuseteil einzubringen sind.

Bei einer vorteilhaften Ausgestaltung ist die jeweilige Schraube durch eine jeweilige Stufenbohrung des Getriebedeckels durchgeführt und in eine jeweilige Gewindebohrung mit ihrem Gewindebereich eingeschraubt,
wobei die Bohrung, insbesondere Stufenbohrung, und die Gewindebohrung jeweils parallel zur zweiten Ziehrichtung aufgerichtet ist,
insbesondere wobei der Schraubenkopf der jeweiligen Schraube an der Deckelfläche, insbesondere an der Stufe der jeweiligen Stufenbohrung, flächig aufliegt. Von Vorteil ist dabei, dass auch die Stufenbohrung parallel zur Ziehrichtung ausgerichtet ist. Der Schraubenkopf liegt auf der Deckelfläche des Getriebedeckels auf, wenn die Bohrung nicht als Stufenbohrung ausgeführt ist. Bei Ausführung der Bohrung als Stufenbohrung hingegen wird die Schraube mit abgesenktem Schraubenkopf ausgeführt.

Bei einer vorteilhaften Ausgestaltung ist die Bohrung, insbesondere Stufenbohrung, in einen ebenen Oberflächenbereich des Getriebedeckels eingebracht, wobei die Normalenrichtung des ebenen Oberflächenbereichs parallel zur zweiten Ziehrichtung ausgerichtet ist. Von Vorteil ist dabei, dass die als Stufenbohrung ausgeführte Bohrung senkrecht zum Oberflächenbereich eingebracht ist.

Bei einer vorteilhaften Ausgestaltung ist das Gehäuseteil derart asymmetrisch ausgeführt, dass diejenige Ebene, deren Normalenrichtung parallel zur Drehachse der ersten Zwischenwelle ausgerichtet ist und welche die Drehachse der eintreibenden Welle enthält, keine Symmetrieebene ist. Von Vorteil ist dabei, dass Material und Innenbereichsvolumen, also auch Ölvolumen, auf der vom Abtriebsrad abgewandten Seite der Ebene einsparbar ist.

Bei einer vorteilhaften Ausgestaltung ist das Gehäuseteil derart asymmetrisch ausgeführt, dass das mit der abtreibenden Welle des Getriebes drehfest verbundene Verzahnungsteil, insbesondere Zahnrad, von der Ebene beabstandet ist,
insbesondere wobei ein größerer Anteil des Volumens des Innenraumbereichs des Getriebes auf der dem Verzahnungsteil zugewandten Seite der Ebene als auf der vom Verzahnungsteil abgewandten Seite der Ebene angeordnet ist. Von Vorteil ist dabei, dass das Gehäuseteil derart ausführbar ist, dass der Innenraumbereich auf der vom Abtriebsrad abgewandten Seite ein kleineres Volumen aufweist als auf der dem Abtriebsrad zugewandten und/oder als auf der das Abtriebsrad umfassenden Seite der Ebene.

Bei einer vorteilhaften Ausgestaltung ist die abtreibende Welle axial beidseitig zugänglich angeordnet, insbesondere wobei die abtreibende Welle als Hohlwelle ausgeführt ist. Von Vorteil ist dabei, dass beidseitig eine anzutreibende Welle verbindbar, insbesondere einsteckbar ist. Die Abtriebswelle ist auch als Vollwelle ausführbar.

Bei einer vorteilhaften Ausgestaltung ist das Gehäuseteil als Aluminium-Druckgussteil gefertigt. Von Vorteil ist dabei, dass das Getriebe eine geringe Masse aufweist und somit vom Motor nur eine geringe Haltekraft aufgebracht werden muss.

Bei einer vorteilhaften Ausgestaltung weist das Gehäuseteil die selbe mechanische Schnittstelle für eine vom Getriebe, insbesondere von der abtreibenden Welle, anzutreibende Last axial beidseitig der abtreibenden Welle auf,
insbesondere also eine erste Schnittstelle am Gehäuseteil zur Verbindung mit einer vom vorderen axialen Endbereich der abtreibenden Welle anzutreibenden Last vorhanden ist und eine zweite Schnittstelle am Gehäuseteil zur Verbindung mit einer vom hinteren axialen Endbereich der abtreibenden Welle anzutreibenden Last vorhanden ist, wobei die erste Schnittstelle identisch ist zur zweiten Schnittstelle,
wobei die Schnittstelle jeweils ein am Gehäuseteil angeordnetes Bohrbild und ein am Gehäuseteil angeordnetes Zentriermittel aufweist. Von Vorteil ist dabei, dass die anzutreibende Last axial beidseitig in der selben Weise verbindbar ist. Wenn jedoch die Last näher am Abtriebsrad angeordnet ist, sind höhere Querkräfte und Biegemomente aufnehmbar als wenn die Last weiter entfernt vom Abtriebsrad angeordnet ist. Denn auf der dem Abtriebsrad zugewandten Seite der Ebene ist die Gehäusewand näher am Abtriebsrad als die axial gegenüberliegende Wand vom Abtriebsrad entfernt ist. Somit sind auch die in der jeweiligen Gehäusewand aufgenommenen Lager der abtreibenden Welle entsprechend weit entfernt.

Wird jedoch die Last auf der vom Abtriebsrad abgewandten Seite der Ebene mit dem Getriebe verbunden, bewirkt der größere Abstand zum Endrad wegen der größeren axialen Länge eine höhere Torsion und höhere Elastizität an der abtreibenden Welle und somit eine weniger steife Verbindung, was zu einem entsprechend anderen Schwungverhalten und zu einer anderen Schwingungsneigung führt.

Die Erfindung wird nun anhand von schematischen Abbildungen näher erläutert:
In der Figur 1 ist ein Gehäuseteil 1 eines erfindungsgemäßen Getriebes in Seitenansicht dargestellt, wobei eine Schnittlinie A - A gekennzeichnet ist.
In der Figur 2 ist ein Querschnitt entlang der Schnittlinien A-A gezeigt.
In der Figur 3 ist das mit Verzahnungsteilen befüllte Gehäuseteil gezeigt.
In der Figur 4 ist eine zugehörige Hinteransicht dargestellt.
In der Figur 5 ist eine Schnittlinie B-B gekennzeichnet.
In der Figur 6 ist ein Querschnitt entlang der Schnittlinien B-B gezeigt.
In der Figur 7 ist ein vergrößerter Ausschnitt aus dem Verbindungsbereich zwischen einem auf das Gehäuseteil 1 aufgesetzten Getriebedeckel 70 mit dem Gehäuseteil 1 dargestellt.
In der Figur 8 ist der Getriebedeckel 70 in Schrägansicht dargestellt.
In der Figur 9 ist eine Flachdichtung 90 in Schrägansicht dargestellt, welche zwischen Getriebedeckel 70 und Gehäuseteil 1 angeordnet ist.
In der Figur 10 ist eine zugehörige Draufsicht auf die Flachdichtung 90 dargestellt.
In der Figur 11 ist eine Schrägansicht des Getriebes dargestellt.
In der Figur 12 ist eine Schrägansicht aus einer anderen Blickrichtung dargestellt.
In der Figur 13 ist ein Querschnitt durch das erfindungsgemäß mit schräger Ziehrichtung hergestellte Gehäuseteil 1 dargestellt, wobei ein nicht erfindungsgemäß mit nicht schräger Ziehrichtung hergestelltes Gehäuseteil gestrichelt angedeutet ist.
In der Figur 14 ist zusätzlich zur Figur 13 die senkrechte Projektion D der Drehachse der ersten Zwischenwelle in eine Ebene E, welche die Ziehrichtung des Kanals 2 enthält, dargestellt und ebenso die senkrechte Projektion (K1 bis K2) des Kanals 2, wodurch erkennbar ist, dass D im von der Projektion des Kanal 2 umfasst ist.

Wie in den Figuren dargestellt, weist das insbesondere aus Aluminium mittels Druckguss hergestellte Gehäuseteil 1 einen Kanal 2 auf, welcher von der Umgebung in den Innenraumbereich des Getriebes mündet. Der Kanal 2 ist der Entformungsbereich eines ersten Schiebers bei der Druckgussherstellung des Gehäuseteils 1. Also ist der Kanal 2 Teilbereich desjenigen Raumbereichs, welcher vom ersten Schieber beim Herausziehen benötigt und/oder durchfahren wird.

Wichtig ist bei der Erfindung, dass die Ziehrichtung des ersten Schiebers, also die Kanalrichtung, einen nicht verschwindenden Winkel zur eintreibenden Welle des Getriebes aufweist. Somit ist also die Ziehrichtung nicht parallel zur eintreibenden Welle. Der Betrag dieses nicht verschwindenden Winkels weist einen Wert auf zwischen 5° und 45°, vorzugsweise zwischen 5° und 20°.

Bei der Druckgussherstellung wird ein zweiter Schieber in einer Ziehrichtung herausgezogen, welche einen nicht verschwindenden Winkel aufweist zu derjenigen Richtung, welche senkrecht zur Richtung der eintreibenden Welle, insbesondere zu deren Drehachse, und senkrecht zur Richtung der abtreibenden Welle, insbesondere zu deren Drehachse, ausgerichtet ist.

Da das Getriebe ein Winkelgetriebe ist, ist die eintreibende Welle 131, insbesondere deren Drehachse, senkrecht gerichtet zur abtreibenden Welle 5, insbesondere zu deren Drehachse.

Die Ziehrichtung des zweiten Schiebers weist also einen nicht verschwindenden Winkel auf zu derjenigen Richtung, welche senkrecht zur Drehachsrichtung der eintreibenden Welle und senkrecht zur Drehachsrichtung der abtreibenden Welle 5 ist. Der Betrag dieses nicht verschwindenden Winkels weist einen Wert auf zwischen 5° und 45°, vorzugsweise zwischen 5° und 20°.

Mit der eintreibenden Welle ist ein Verzahnungsteil, insbesondere Ritzel, drehfest verbunden oder alternativ ist eine Verzahnung an der eintreibenden Welle ausgeformt. Hiermit steht ein auf einer Zwischenwelle 20 des Getriebes drehfest mit der Zwischenwelle 20 angeordnetes Verzahnungsteil 21, insbesondere Tellerrad, im Eingriff. Diese Zwischenwelle 20 ist mittels Lagern drehbar gelagert, wobei die Lager im Gehäuseteil 1 aufgenommen sind. Die Lageraufnahmen der Lager sind jeweils mit einem Deckelteil 3, insbesondere Verschlusskappe, abgedeckte. Das Deckelteil 3 dichtet außerdem öldicht gegen die Umgebung ab.

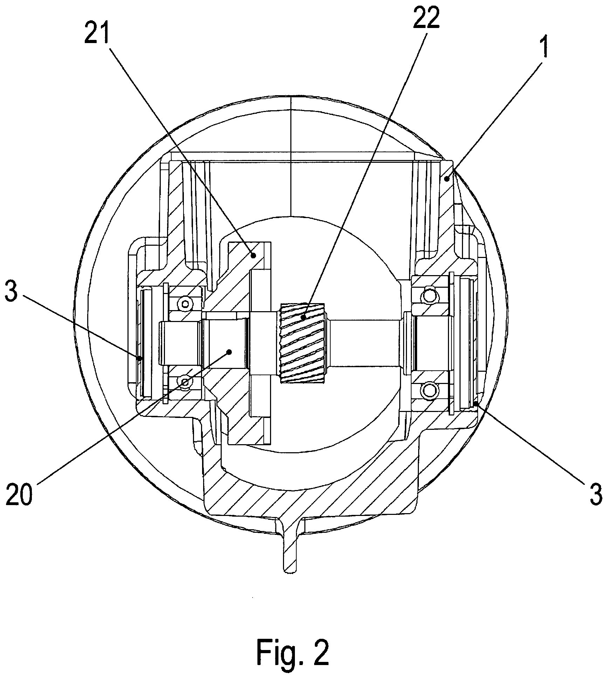

Wie in Figur 2 gezeigt, ist die Zwischenwelle 20 drehfest mit der Verzahnung 22 verbunden.

Die Zwischenwelle weist auch eine Verzahnung 22 auf, welche somit drehfest verbunden ist mit der Zwischenwelle 20 und im Eingriff steht mit einer Verzahnung oder mit einem Verzahnungsteil einer weiteren Welle des Getriebes.

Die eintreibende Welle ragt in den Kanal 2 hinein. Die eintreibende Welle ist drehfest mit der Rotorwelle des Elektromotors verbunden oder einstückig, also einteilig, mit der Rotorwelle des Elektromotors ausgeführt.

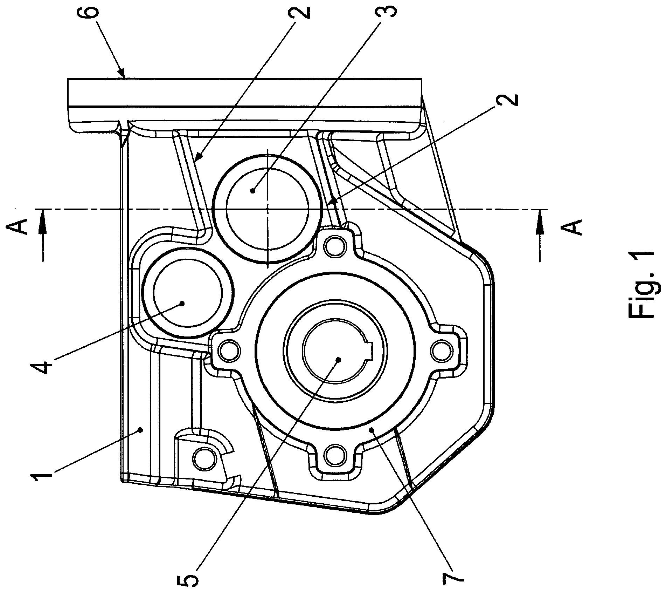

Wie in Figur 1 ersichtlich, enthält die senkrechte Projektion des Kanals in eine die Ziehrichtung des ersten Schiebers enthaltende Ebene die senkrechte Projektion der Drehachse des Verzahnungsteils 21, insbesondere Tellerrads. Insbesondere enthält sie mehr als die Hälfte der senkrechten Projektion des gesamten Verzahnungsteils 21.

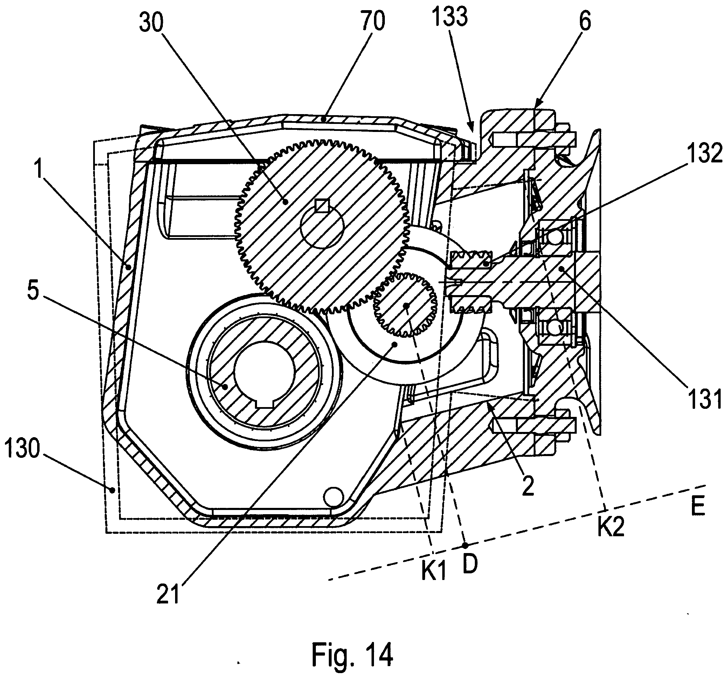

In Figur 1 ist dies daran erkennbar, dass der Mittelpunkt der Verschlusskappe 3 senkrecht projiziert auf den Rand des Kanals im Kanal 2 liegt und nicht außerhalb. Dies ist auch durch die senkrechte Projektion D in Figur 14 verdeutlicht, welche die Projektion des Mittelpunkts in eine zur Ziehrichtung parallele Ebene E darstellt. Diese senkrechte Projektion (K1 bis K2) ist in der senkrechten Projektion des Kanals 2 enthalten.

Somit ragt also das Verzahnungsteil 21 in den Kanal 2 hinein, insbesondere ragt mehr als die Hälfte des Verzahnungsteils 21 in den Kanal 2 hinein.

Mittels der ebenfalls schrägen Ziehrichtung des zweiten Schiebers ist ein verringertes Ölvolumen erreichbar, da die Wandung des Gehäuseteils 1 sich näher an die Verzahnungsteile anschmiegt als bei nicht schrägen, also jeweils zueinander senkrechten Ziehrichtungen der Schieber.

Der Kanal 2 durchdringt den Flanschbereich 6 und mündet in die Umgebung. Die so entstandene Öffnung ist bei Anbau des Elektromotors verschlossen, da das Gehäuse des Elektromotors mit dem Flanschbereich 6 des Gehäuseteils 1 verbunden wird, insbesondere mittels Schrauben.

Das Getriebe ist ohne Fußbereiche ausgeführt und der Elektromotor ist über die Verbindung zwischen Flanschbereich 6 und Gehäuse des Elektromotors gehalten. Vorteiligerweise fungiert somit diese Verbindung auch als Drehmomentstütze für den Motor. Über den abtriebsseitigen Flanschbereich 7, welcher mit einem nicht drehbar angeordneten Bereich der anzureibenden Last verbunden ist, ist der Getriebemotor, aufweisend Elektromotor und Getriebe, gehalten.

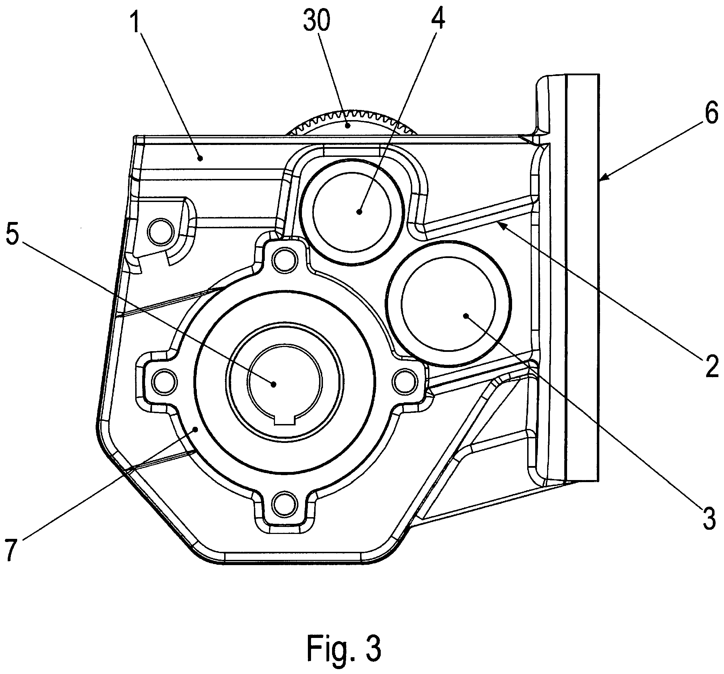

In Figur 3 ist das Getriebe in Seitenansicht dargestellt, wobei der Getriebedeckel 70 abgehoben ist. Somit ragt das drehfest mit einer weiteren Zwischenwelle verbundene Verzahnungsteil 30 aus dem Innenraumbereich des Getriebes teilweise heraus.

Wie in der Hinteransicht, also Draufsicht mit Blickrichtung entgegen der eintreibenden Welle, gezeigt, ist das Getriebe asymmetrisch ausgeführt. Denn diejenige Ebene 42, deren Normalenrichtung parallel zur Drehachse der abtreibenden Welle 5 ausgerichtet ist und welche die Drehachse der eintreibenden Welle enthält, ist keine Symmetrieebene.

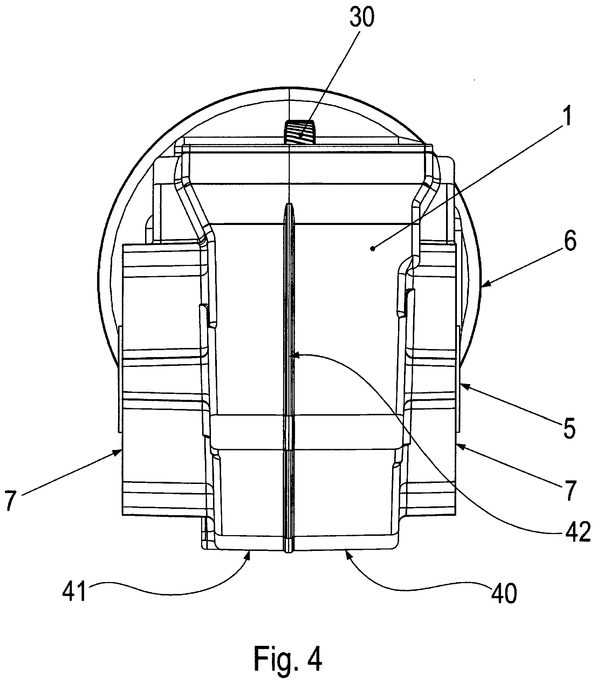

Insbesondere ist in Figur 4 im Bereich 40, also rechts von der Ebene 42, ein größerer Anteil des Volumens des Innenraumbereichs des Getriebes als im Bereich 41, also links von der Ebene 42. In dem rechts von der Ebene 42 angeordneten Anteil des Innenraumbereichs ist auch das Abtriebsrad, also das drehfest mit der abtreibenden Welle 5 verbundene Verzahnungsteil, angeordnet.

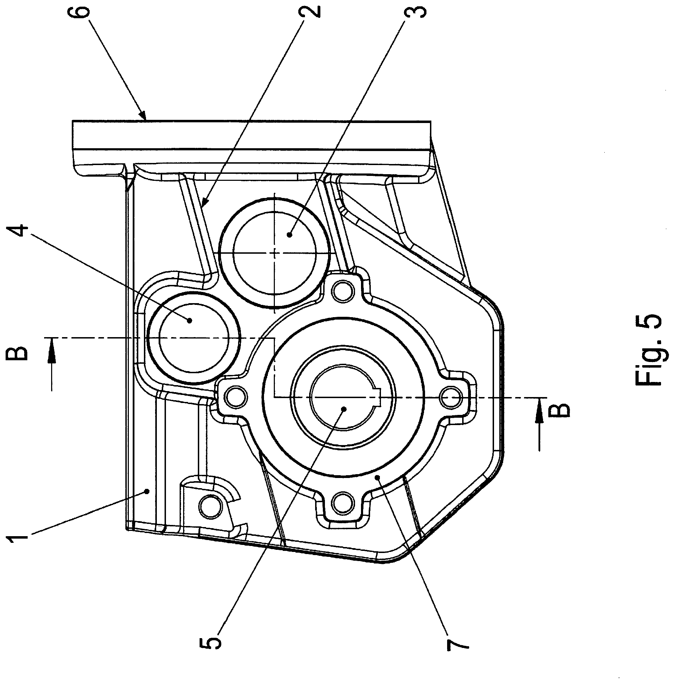

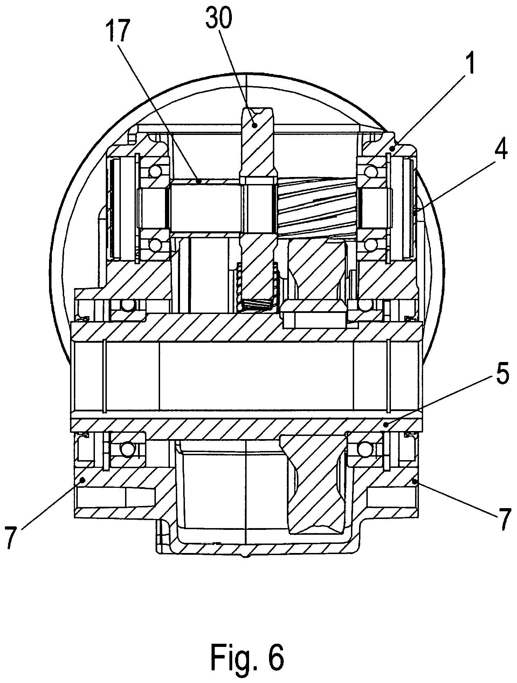

In Figur 5 ist die für den Querschnitt gemäß Figur 6 relevante Schnittlinie dargestellt. Hierbei ist in Figur 6 klar erkennbar, dass das Abtriebsrad, rechts von der Ebene angeordnet ist. Ebenso ist die durch das Deckelteil 4, insbesondere Verschlusskappe, zur Umgebung hin abgedeckte Zwischenwelle mit einer Verzahnung versehen, die mit dem Abtriebsrad im Eingriff ist.

Wie in den Figuren dargestellt, ist die abtreibende Welle 5 axial beidseitig zugänglich angeordnet. Insbesondere ist die abtreibende Welle 5 als Hohlwelle ausgeführt.

Wesentlich ist also, dass das Gehäuseteil 1 derart asymmetrisch ausgeführt ist, dass das Abtriebsrad von der Ebene 42 beabstandet ist. Somit ist auf der dem Abtriebsrad zugewandten Seite der Ebene 42 mehr Schmieröl und ein größerer Anteil des Innenraumbereichs des Getriebes angeordnet als auf der vom Abtriebsrad abgewandten Seite der Ebene 42.

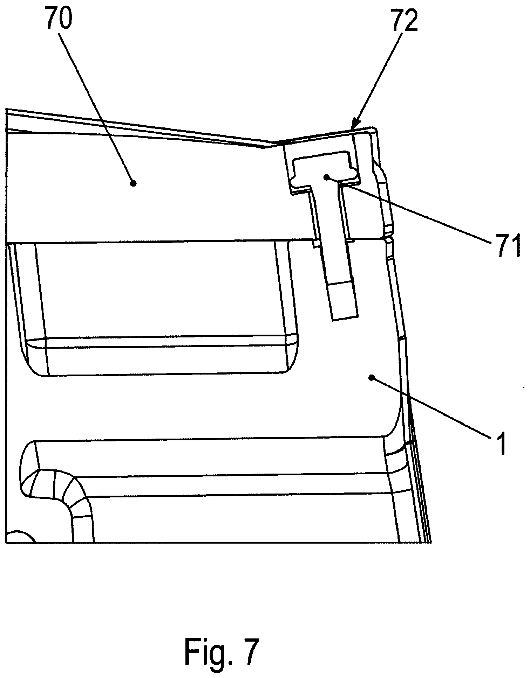

Wie in Figur 7 gezeigt, ist der Getriebedeckel 70 mittels Schrauben 71 ans Gehäuseteil 1 angeschraubt.

Da die Wandstärke des Gehäuseteils, insbesondere in der Nähe des Kontaktbereichs zwischen Gehäuseteil 1 und Getriebedeckel 70, konstant ist, verläuft die Wandung des Gehäuseteils 1 parallel zur Ziehrichtung.

Somit sind die Schrauben 71 ebenfalls parallel zu dieser Ziehrichtung ausgerichtet. Die Normalenrichtung der ebenen Verbindungsfläche zwischen Getriebedeckel 70 und Gehäuseteil 1 ist also nicht parallel zu der Schraubachse der Schrauben 71 ausgerichtet.

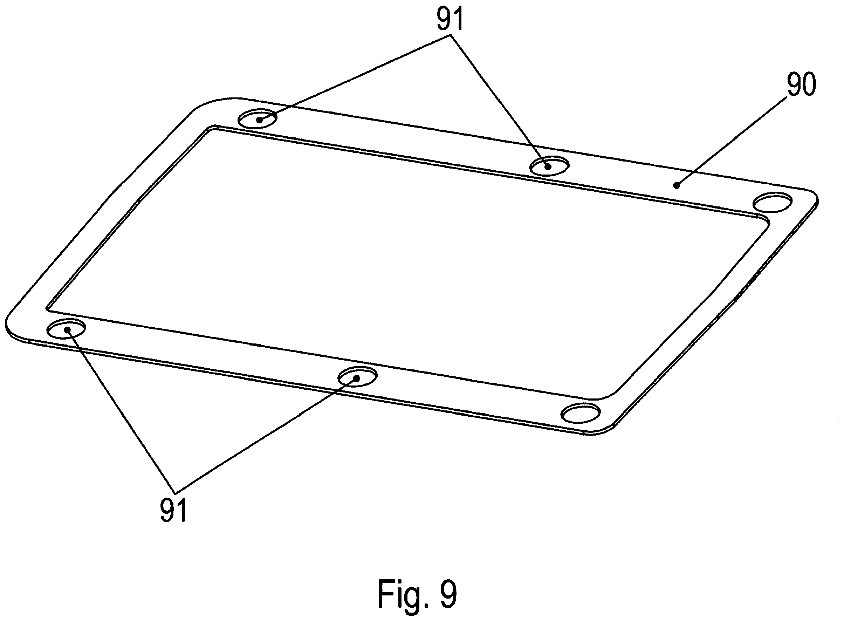

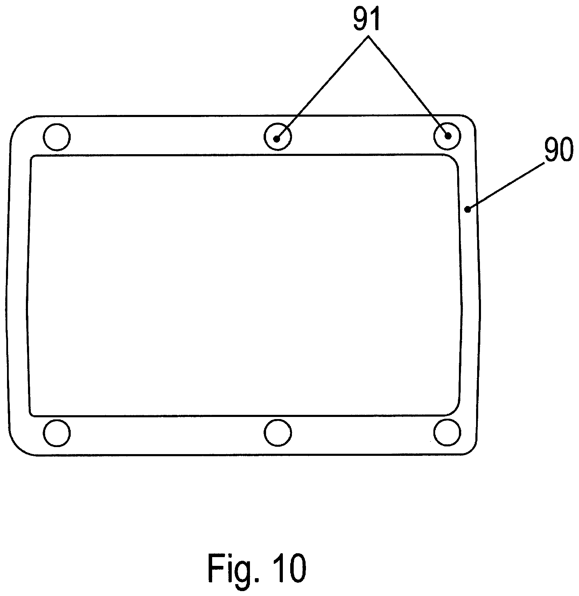

Auf diese Weise ist eine hohe Stabilität und Festigkeit des Getriebes gewährleistet. Außerdem ist im Bereich der Verbindungsfläche eine Flachdichtung 90 zwischengeordnet, die in Figur 9 und Figur 10 näher dargestellt ist.

Wie in Figur 7 gezeigt, weist die Oberseite des Getriebedeckels einen ebenen Bohrflächenbereich 72 auf, in welchen eine durchgehende Stufenbohrung eingebracht ist, so dass die Schraube 71 mit ihrem Schraubenkopf an der Stufe der Stufenbohrung anliegt und ihr Gewindebereich in eine Gewindebohrung des Gehäuseteils 1 eingebracht ist. Die Gewindebohrung und die Sacklochbohrung liegen in Flucht zueinander und sind somit beide parallel zur Ziehrichtung des zweiten Schiebers ausgerichtet.

Zur Herstellung der Gewindebohrung wird das Gehäuseteil 1 mit einem Keil unterlegt und dann die Gewindebohrung in die Verbindungsfläche eingebracht. Der Keilwinkel des Keils gleicht dem Neigungswinkel und/oder der Schräge der Ziehrichtung des zweiten Schiebers.

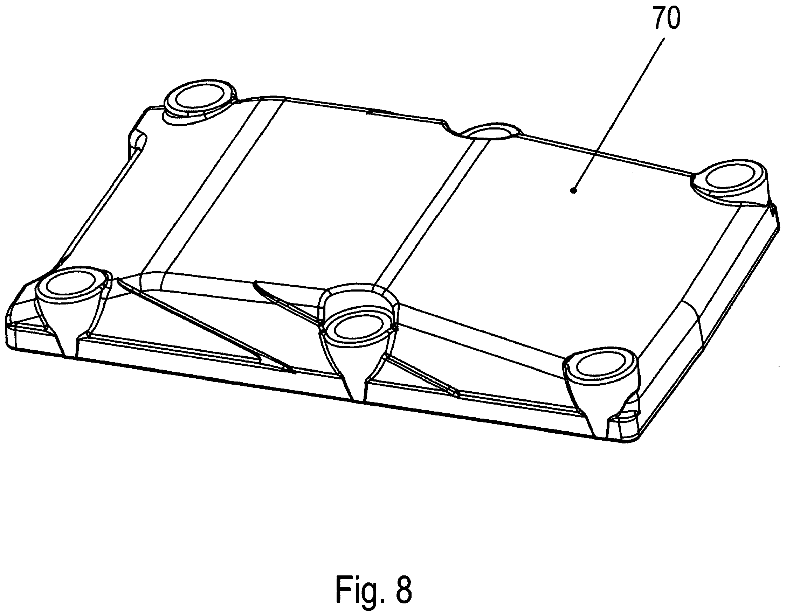

Figur 8 zeigt den Getriebedeckel 70 in Schrägansicht.

Figur 9 und 10 zeigen die Flachdichtung 90 samt durchgehender kreisrunder, insbesondere also zylindrischer, Ausnehmungen 91, durch welche bei auf dem Gehäuseteil 1 aufgesetztem Getriebedeckel 70 die Schrauben 71 durchgeführt sind, obwohl diese schräg ausgerichtet sind, also einen nicht verschwindenden Winkel zur Normalenrichtung der Verbindungsfläche aufweisen.

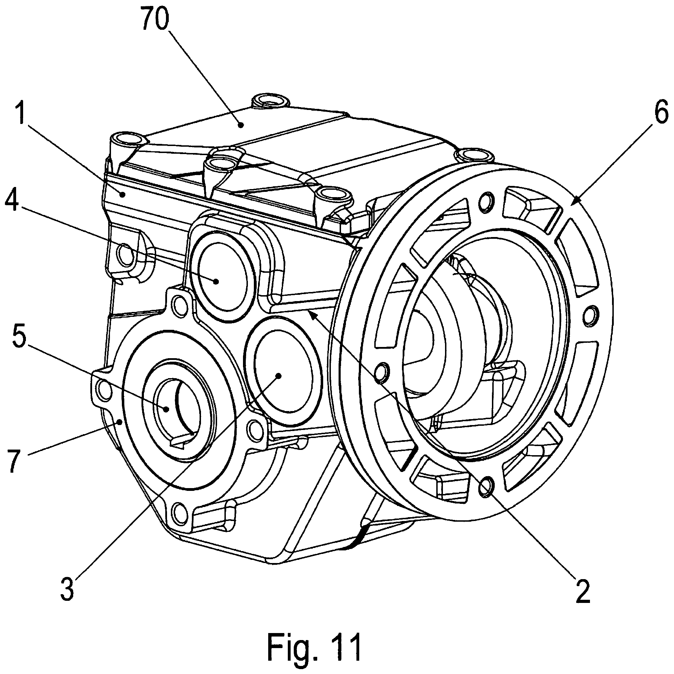

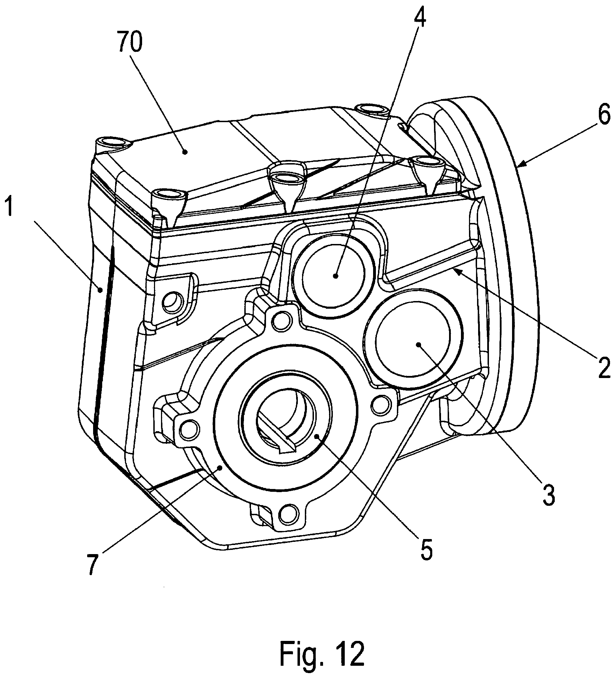

Figur 11 und 12 zeigen das Getriebe aus verschiedenen Blickrichtungen. Hierbei ist wiederum die schräge Ausrichtung der Ziehrichtung des ersten Schiebers ersichtlich sowie auch die schräge Ausrichtung der Ziehrichtung des zweiten Schiebers.

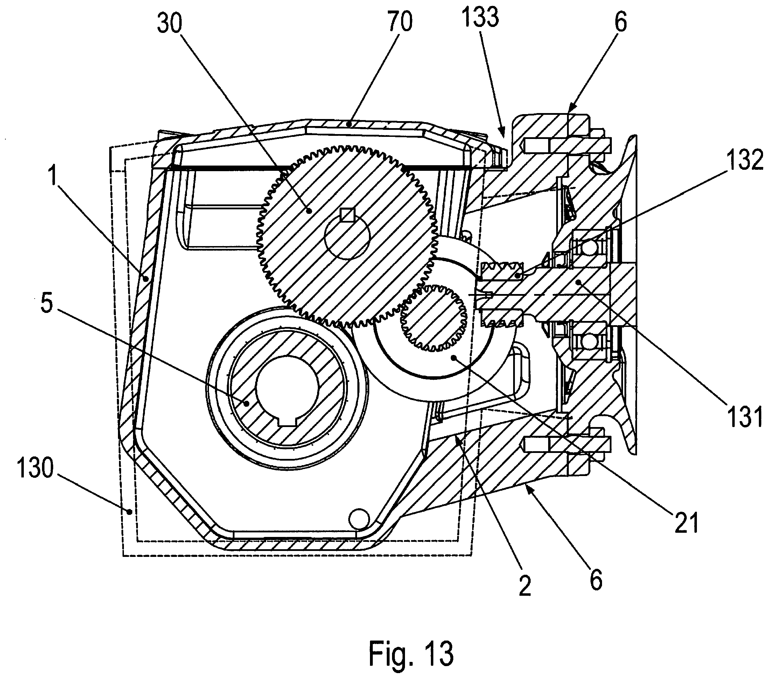

Figur 13 zeigt einen Querschnitt durch das erfindungsgemäße Getriebe mit Gehäuseteil 1, wobei der entsprechende Querschnitt durch ein anderes Gehäuseteil, bei dessen Herstellung die Ziehrichtungen nicht schräg sind, sondern parallel zueinander oder mit einem Winkelbetrag von 90° zueinander ausgerichtet sind.

Die Rotorwelle des Elektromotors fungiert in dem Ausführungsbeispiel nach Figur 13 als eintreibende Welle 131, welche mit dem Ritzel 132 drehfest verbunden ist, welches im Eingriff ist mit dem Tellerrad 21 der ersten Zwischenwelle 20 des Getriebes. Das Tellerrad ragt in den Kanal 2 hinein. Insbesondere liegt die senkrechte Projektion der Drehachse des Tellerrads deutlich im Kanal 2, insbesondere auf dem unteren Rand des Kanals 2.

Mit gestrichelten Linien ist 130 ein gedachtes Gehäuseteil bei nicht schräger Ziehrichtung gezeigt. Im Vergleich mit dem gedachten Gehäuseteil 130 wird deutlich, dass der Gehäusedeckel 1 verkürzt ausführbar ist. Die Gehäuseöffnung ist möglichst klein. Der Getriebedeckel 70 ist verkürzt ausführbar.

Die Ausführung des Gehäuseteils 1 als Aluminium-Druckgussteil bewirkt ein verringertes Gesamtgewicht gegenüber einer Ausführung aus Stahl.

Zwischen Getriebedeckel 70 und Flanschbereich 6 ist eine Engstelle 133 vorhanden, die bei der gestrichelten Variante ein Überlackieren erschwert oder verhindert. Erfindungsgemäß, also bei der Verwendung der schrägen Ziehrichtungen, wird der Abstand zwischen Flanschbereich 6 und Getriebedeckel 70 vergrößert, so dass die Engstelle kein Risiko darstelle, sondern eine Lackierung in einfacher Weise ermöglicht ist. Außerdem ist ein Festsetzen von Schmutz an der Engstelle 133 erschwert und ein Reinigen vereinfacht, da mehr Platz vorhanden ist.

Die Kanalwandung und die Lageraufnahme, also der eintreibende und der abtreibende Bereich sind infolge der erfindungsgemäßen schrägen Ziehrichtungen verstärkt ausführbar. Dies ist besonders vorteilhaft, da das Getriebe als Aufsteckgetriebe fungiert, also von dem nicht drehbar angeordneten Bereich einer vom Getriebe anzutreibenden Last gehalten wird.

Axial beidseitig ist an der abtreibenden Welle eine anzutreibende Last verbindbar. Hierzu ist einerseits eine Verbindung zwischen einem drehenden Teil, insbesondere Vollwellenabschnitt, der anzutreibenden Last mit der Hohlwelle drehfest zu verbinden. Außerdem ist auch der nicht drehbar angeordnete Bereich der anzutreibenden Last mit dem Gehäuseteil zu verbinden.

Hierzu ist axial beidseitig die selbe mechanische Schnittstelle am Gehäuseteil 1 ausgebildet. Diese Schnittstelle weist einerseits ein Zentriermittel, wie Zentrierrand oder Zentrierbund, auf und andererseits ein Bohrbild für Verbindungsschrauben. Diese Schnittstelle ist entgegen der Gehäusewand symmetrisch zur Ebene 42 in Figur 4 ausgerichtet.

Somit ist also die Last mit dem selben Bohrbild wahlweise von axial vorne oder von axial hinten kommend mit dem Gehäuseteil 1 verbindbar.

In Figur 14 kennzeichnet das Bezugszeichen D die senkrechte Projektion der Drehachse der ersten Zwischenwelle 20 in Ebene E, das Bezugszeichen E die Ebene, insbesondere Ebene, welche parallel zur Ziehrichtung des Kanals 2 ausgerichtet ist, das Bezugszeichen K1 die senkrechte Projektion der äußersten Mündung des Kanals 2 in den Getriebeinnenraumund das Bezugszeichen K2 die senkrechte Projektion der äußersten Mündung des Kanals 2 zur Umgebung hin.

### Bezugszeichenliste

1 Gehäuseteil
2 Kanal
3 Deckelteil, insbesondere Verschlusskappe
4 Deckelteil, insbesondere Verschlusskappe
5 abtreibende Welle
6 eintriebsseitiger Flanschbereich
7 abtriebsseitiger Flanschbereich
20 Zwischenwelle
21 Verzahnungsteil, insbesondere Tellerrad
22 Verzahnung
30 weiteres Verzahnungsteil
40 erster Bereich des Gehäuseteils 1
41 zweiter Bereich des Gehäuseteils 1
42 Ebene
70 Getriebedeckel
71 Schraube, insbesondere Verbindungsschraube
72 ebener Bohrflächenbereich
90 Flachdichtung
91 Ausnehmung
130 gedachtes Gehäuseteil bei nicht schräger Ziehrichtung
131 eintreibende Welle
132 Ritzel
133 Bereich der Engstelle
D senkrechte Projektion der Drehachse der ersten Zwischenwelle 20 in Ebene E
E Ebene, insbesondere Ebene, welche parallel zur Ziehrichtung des Kanals 2 ausgerichtet ist
K1 Senkrechte Projektion der äußersten Mündung des Kanals 2 in den Getriebeinnenraum
K2 Senkrechte Projektion der äußersten Mündung des Kanals 2 zur Umgebung hin

## Patentansprüche

1. Getriebemotor, aufweisend
- ein mittels Druckgussverfahrens hergestelltes Gehäuseteil (1) und
- eine eintreibende Welle (131),
- wobei beim Druckgussverfahren zum Entformen **ein erster Schieber in einer ersten Ziehrichtung und ein zweiter Schieber in einer zweiten Ziehrichtung** bewegt werden
oder wobei nach dem Druckgussverfahren zum Entformen **ein erster Schieber in einer ersten Ziehrichtung und ein zweiter Schieber in einer zweiten Ziehrichtung** bewegt werden,
wobei das Gehäuseteil (1) einen in **der** ersten Ziehrichtung, mit einem ersten Schieber, entformten Kanal (2) aufweist, welcher durch die Wandung des Gehäuses durchgehend ausgeführt ist und in den Innenraumbereich des Getriebes mündet,
**dadurch gekennzeichnet, dass**
**zwischen der ersten** Ziehrichtung **und der** Drehachse der eintreibenden Welle **ein nicht verschwindender Winkel vorgesehen ist,** dessen Betrag zwischen 5° und 45°, beträgt,
wobei das Gehäuseteil (1) mit einem Getriebedeckel (70) verbunden ist, wobei die Verbindungsfläche eben ausgeführt ist,
wobei der Getriebedeckel (70) mittels Schrauben (71) mit dem Gehäuseteil (1) verbunden ist,
wobei die **ebene** Verbindungsfläche parallel zur Drehachse der eintreibenden Welle und parallel zur Drehachse der Zwischenwelle (20) **ausgerichtet ist,**
wobei die **Schraubachsrichtungen der** Schrauben (71), parallel zur zweiten Ziehrichtung ausgerichtet sind.

2. Getriebemotor nach Anspruch 1,
**dadurch gekennzeichnet, dass**
das Getriebe ein Winkelgetriebe ist,
wobei eine mit der eintreibenden Welle drehfest verbunden Verzahnung, insbesondere eines Ritzels (132), mit der Verzahnung eines Tellerrads im Eingriff ist, wobei das Tellerrad mit einer ersten Zwischenwelle (20) des Getriebes drehfest verbunden ist,
wobei **eine** senkrechte Projektion (D) der Drehachse der ersten Zwischenwelle (20) auf die Ziehrichtung, insbesondere auf eine die Ziehrichtung enthaltende Ebene (E), in demjenigen Bereich (K1 - K2) enthalten ist, welcher von der senkrechten Projektion des Kanals (2) auf die Ziehrichtung, insbesondere auf die die Ziehrichtung enthaltende Ebene, überdeckt ist.

3. Getriebemotor nach mindestens einem der vorangegangenen Ansprüche,
**dadurch gekennzeichnet, dass**
der lichte Durchmesser des Kanals (2) größer ist als der größte Außendurchmesser des Tellerrads.

4. Getriebemotor nach mindestens einem der vorangegangenen Ansprüche,
**dadurch gekennzeichnet, dass**
das Gehäuseteil (1) einen in einer zweiten Ziehrichtung, insbesondere mit einem zweiten Schieber, entformten Bereich aufweist,
wobei die zweite Ziehrichtung zur Normalenrichtung der von der Drehachse der eintreibenden Welle und der Drehachse der ersten Zwischenwelle (20) aufgespannten Ebene einen nicht verschwindenden Winkel aufweist, insbesondere dessen Betrag zwischen 5° und 45°, insbesondere zwischen 5° und 20°, beträgt.

5. Getriebemotor nach mindestens einem der vorangegangenen Ansprüche,
**dadurch gekennzeichnet, dass**
der Kanal (2) durch einen Flanschbereich (6) des Getriebes durchgeht,
wobei das Getriebe am Flanschbereich (6) mit dem Elektromotor verbunden ist,
insbesondere wobei das Getriebe den Elektromotor hält und von einem nicht drehbar angeordneten Teil einer vom Getriebe anzutreibenden Last, insbesondere Maschine, gehalten ist.

6. Getriebemotor nach mindestens einem der vorangegangenen Ansprüche,
**dadurch gekennzeichnet, dass**
**eine Flachdichtung (90) zwischen Gehäuseteil (1) und Getriebedeckel (70) angeordnet ist.**

7. Getriebemotor nach mindestens einem der vorangegangenen Ansprüche,
**dadurch gekennzeichnet, dass**
die jeweilige Schraube (71) durch eine jeweilige Bohrung, insbesondere Stufenbohrung, des Getriebedeckels (70) durchgeführt und in eine jeweilige Gewindebohrung mit ihrem Gewindebereich eingeschraubt ist,
wobei die Stufenbohrung und die Gewindebohrung jeweils parallel zur zweiten Ziehrichtung aufgerichtet ist,
insbesondere wobei der Schraubenkopf der jeweiligen Schraube (71) an der Deckelfläche oder an der Stufe der jeweiligen Stufenbohrung flächig aufliegt.

8. Getriebemotor nach Anspruch 7,
**dadurch gekennzeichnet, dass**
die Stufenbohrung in einen ebenen Oberflächenbereich des Getriebedeckels (70) eingebracht ist, wobei die Normalenrichtung des ebenen Oberflächenbereichs parallel zur zweiten Ziehrichtung ausgerichtet ist.

9. Getriebemotor nach mindestens einem der vorangegangenen Ansprüche,
**dadurch gekennzeichnet, dass**
das Gehäuseteil (1) derart asymmetrisch ausgeführt ist, dass diejenige Ebene (42), deren Normalenrichtung parallel zur Drehachse der ersten Zwischenwelle (20) ausgerichtet ist und welche die Drehachse der eintreibenden Welle enthält, keine Symmetrieebene ist.

10. Getriebemotor nach mindestens einem der vorangegangenen Ansprüche,
**dadurch gekennzeichnet, dass**
das Gehäuseteil (1) derart asymmetrisch ausgeführt ist, dass das mit einer abtreibenden Welle des Getriebes drehfest verbundene Verzahnungsteil (21), insbesondere Zahnrad, von der Ebene beabstandet ist,
insbesondere wobei ein größerer Anteil des Volumens des Innenraumbereichs des Getriebes auf der dem Verzahnungsteil (21) zugewandten Seite der Ebene als auf der vom Verzahnungsteil (21) abgewandten Seite der Ebene angeordnet ist.

11. Getriebemotor nach Anspruch 10,
**dadurch gekennzeichnet, dass**
die abtreibende Welle 5 axial beidseitig zugänglich angeordnet ist, insbesondere wobei die abtreibende Welle 5 als Hohlwelle ausgeführt ist.

12. Getriebemotor nach mindestens einem der vorangegangenen Ansprüche,
**dadurch gekennzeichnet, dass**
das Gehäuseteil (1) als Aluminium-Druckgussteil gefertigt ist.

13. Getriebemotor nach mindestens einem der vorangegangenen Ansprüche,
**dadurch gekennzeichnet, dass**
das Gehäuseteil (1) die selbe mechanische Schnittstelle für eine vom Getriebe, insbesondere von der abtreibenden Welle, anzutreibende Last axial beidseitig der abtreibenden Welle aufweist,
insbesondere also eine erste Schnittstelle am Gehäuseteil (1) zur Verbindung mit einer vom vorderen axialen Endbereich der abtreibenden Welle anzutreibenden Last vorhanden ist und eine zweite Schnittstelle am Gehäuseteil (1) zur Verbindung mit einer vom hinteren axialen Endbereich der abtreibenden Welle anzutreibenden Last vorhanden ist, wobei die erste Schnittstelle identisch ist zur zweiten Schnittstelle,
wobei die Schnittstelle jeweils ein am Gehäuseteil (1) angeordnetes Bohrbild und ein am Gehäuseteil (1) angeordnetes Zentriermittel aufweist.

## Claims

1. A geared motor,
having
- a housing part (1) manufactured by means of a die casting process and
- an input shaft (131),
- wherein a first pusher is moved in a first pulling direction and a second pusher is moved in a second pulling direction for demoulding during the die casting process or wherein a first pusher is moved in a first pulling direction and a second pusher is moved in a second pulling direction for demoulding after the die casting process,
wherein the housing part (1) has a channel (2) demoulded in the first pulling direction using a first pusher, which channel (2) passes through the wall of the housing and issues into the interior region of the gear,
**characterised in that**
a non-zero angle is provided between the first pulling direction and the rotational axis of the input shaft, the amount of the angle being between 5° and 45°,
wherein the housing part (1) is connected to a gear cover (70), wherein the connecting surface is plane,
wherein the gear cover (70) is connected to the housing part (1) by means of screws (71),
wherein the plane connecting surface is oriented parallel to the rotational axis of the input shaft and parallel to the rotational axis of the intermediate shaft (20),
wherein the screw axial directions of the screws (71) are oriented parallel to the second pulling direction.

2. A geared motor according to claim 1,
**characterised in that**
the gear is an angle gear,
wherein toothing, in particular of a pinion (132), connected to the input shaft in a rotationally-fixed manner engages the toothing of a ring gear, wherein the ring gear is connected to a first intermediate shaft (20) of the gear in a rotationally-fixed manner,
wherein a perpendicular projection (D) of the rotational axis of the first intermediate shaft (20) onto the pulling direction, in particular onto a plane (E) containing the pulling direction, is contained **in that** region (K1 - K2) which is covered by the perpendicular projection of the channel (2) onto the pulling direction, in particular onto the plane containing the pulling direction.

3. A geared motor according to at least one of the preceding claims,
**characterised in that**
the internal diameter of the channel (2) is greater than the greatest outside diameter of the ring gear.

4. A geared motor according to at least one of the preceding claims,
**characterised in that**
the housing part (1) has a region demoulded in a second pulling direction, in particular using a second pusher,
wherein the second pulling direction has a non-zero angle to the normal direction of the plane spanned by the rotational axis of the input shaft and the rotational axis of the first intermediate shaft (20), in particular its amount is between 5° and 45°, in particular between 5° and 20°.

5. A geared motor according to at least one of the preceding claims,
**characterised in that**
the channel (2) passes through a flange region (6) of the gear,
wherein the gear is connected to the electric motor at the flange region (6),
in particular wherein the gear supports the electric motor and is supported by a non-rotatably arranged part of a load, in particular machine, to be driven by the gear.

6. A geared motor according to at least one of the preceding claims,
**characterised in that**
a gasket (90) is arranged between housing part (1) and gear cover (70).

7. A geared motor according to at least one of the preceding claims,
**characterised in that**
the respective screw (71) is passed through a respective bore, in particular stepped bore, of the gear cover (70) and is screwed into a respective tapped bore with its threaded region, wherein the stepped bore and the tapped bore are in each case erected [sic] parallel to the second pulling direction,
in particular wherein the screw head of the respective screw (71) rests in a flat manner against the cover surface or against the step of the respective stepped bore.

8. A geared motor according to claim 7,
**characterised in that**
the stepped bore is made in a plane surface region of the gear cover (70), wherein the normal direction of the plane surface region is oriented parallel to the second pulling direction.

9. A geared motor according to at least one of the preceding claims,
**characterised in that**
the housing part (1) is asymmetrical in such a manner that that plane (42) whose normal direction is oriented parallel to the rotational axis of the first intermediate shaft (20) and which contains the rotational axis of the input shaft is not a plane of symmetry.

10. A geared motor according to at least one of the preceding claims,
**characterised in that**
the housing part (1) is asymmetrical in such a manner that the toothed part (21), in particular toothed wheel, connected in a rotationally-fixed manner to an output shaft of the gear is spaced apart from the plane,
in particular wherein a greater portion of the volume of the interior region of the gear is arranged on the side, facing the toothed part (21), of the plane than on the side, remote from the toothed part (21), of the plane.

11. A geared motor according to claim 10,
**characterised in that**
the output shaft 5 is arranged in a manner axially accessible at both ends, in particular wherein the output shaft 5 is in the form of a hollow shaft.

12. A geared motor according to at least one of the preceding claims,
**characterised in that**
the housing part (1) is manufactured as an aluminium die-cast part.

13. A geared motor according to at least one of the preceding claims,
**characterised in that**
axially at both ends of the output shaft, the housing part (1) has the same mechanical interface for a load to be driven by the gear, in particular by the output shaft,.
in particular therefore a first interface is present at the housing part (1) for connection to a load to be driven by the front, axial end region of the output shaft and a second interface is present at the housing part (1) for connection to a load to be driven by the rear, axial end region of the output shaft, wherein the first interface is identical to the second interface,
wherein the interface has in each case a bore pattern arranged at the housing part (1) and a centering means arranged at the housing part (1).

## Revendications

1. Motoréducteur
comprenant
- une partie (1) formant carter, fabriquée au moyen d'un procédé de coulée sous pression, et
- un arbre d'entrée (131),
- sachant que, lors du procédé de coulée sous pression, un premier coulisseau et un second coulisseau sont mus, respectivement, dans une première direction de traction et dans une seconde direction de traction, en vue du démoulage,
ou sachant qu'à l'issue dudit procédé de coulée sous pression, un premier coulisseau et un second coulisseau sont mus, respectivement, dans une première direction de traction et dans une seconde direction de traction, en vue du démoulage,
ladite partie (1) formant carter étant munie d'un canal (2) qui est démoulé avec un premier coulisseau, dans la première direction de traction, est de réalisation continue à travers la paroi du carter, et débouche dans la zone d'espace intérieur de l'engrenage,
**caractérisé par le fait**
**qu'**il est prévu, entre la première direction de traction et l'axe de rotation de l'arbre d'entrée, un angle non évanescent dont la valeur est comprise entre 5° et 45°,
sachant que la partie (1) formant carter est reliée à un couvercle (70) de l'engrenage, la surface de jonction étant de réalisation plane,
ledit couvercle (70) de l'engrenage étant relié à ladite partie (1) formant carter, au moyen de vis (71),
ladite surface plane de jonction étant orientée parallèlement à l'axe de rotation de l'arbre d'entrée, et parallèlement à l'axe de rotation de l'arbre intermédiaire (20),
les directions des axes des vis (71) étant orientées parallèlement à la seconde direction de traction.

2. Motoréducteur selon la revendication 1,
**caractérisé par le fait que**
l'engrenage est un engrenage conique,
sachant qu'une denture appartenant notamment à un pignon (132), reliée à l'arbre d'entrée avec verrouillage rotatif, est en prise avec la denture d'une couronne dentée, laquelle couronne dentée est reliée, avec verrouillage rotatif, à un premier arbre intermédiaire (20) dudit engrenage,
une projection verticale (D) de l'axe de rotation dudit premier arbre intermédiaire (20) sur la direction de traction, en particulier sur un plan (E) contenant ladite direction de traction, étant incluse dans la zone (K1 - K2) couverte par la projection verticale du canal (2) sur ladite direction de traction, notamment sur ledit plan contenant ladite direction de traction.

3. Motoréducteur selon au moins l'une des revendications précédentes, **caractérisé par le fait que**
le diamètre intérieur du canal (2) est supérieur au diamètre extérieur maximal de la couronne dentée.

4. Motoréducteur selon au moins l'une des revendications précédentes, **caractérisé par le fait que**
la partie (1) formant carter comporte une région démoulée dans une seconde direction de traction, notamment avec un second coulisseau,
laquelle seconde direction de traction présente, par rapport à la direction normale au plan sous-tendu par l'axe de rotation de l'arbre d'entrée et par l'axe de rotation du premier arbre intermédiaire (20), un angle non évanescent dont la valeur est notamment comprise entre 5° et 45°, en particulier entre 5° et 20°.

5. Motoréducteur selon au moins l'une des revendications précédentes,
**caractérisé par le fait que**
le canal (2) s'étend d'un trait à travers une zone (6) de bridage de l'engrenage,
lequel engrenage est relié au moteur électrique au niveau de ladite zone de bridage (6), sachant notamment que l'engrenage retient ledit moteur électrique et est retenu par une partie, agencée sans aptitude rotatoire, d'une charge devant être entraînée par ledit engrenage, d'une machine en particulier.

6. Motoréducteur selon au moins l'une des revendications précédentes,
**caractérisé par le fait**
**qu'**une garniture d'étanchement (90) aplatie est interposée entre la partie (1) formant carter et le couvercle (70) de l'engrenage.

7. Motoréducteur selon au moins l'une des revendications précédentes,
**caractérisé par le fait que**
la vis (71) considérée est engagée à travers un alésage respectif, en particulier un alésage étagé du couvercle (70) de l'engrenage, et est vissée dans un trou taraudé respectif, par sa région filetée,
ledit alésage étagé et ledit trou taraudé étant orientés, à chaque fois, parallèlement à la seconde direction de traction,
sachant notamment que la tête de ladite vis (71) considérée porte à plat contre la surface du couvercle, ou contre le gradin dudit alésage étagé respectif.

8. Motoréducteur selon la revendication 7,
**caractérisé par le fait que**
l'alésage étagé est pratiqué dans une zone de surface plane du couvercle (70) de l'engrenage, la direction normale à ladite zone de surface plane étant orientée parallèlement à la seconde direction de traction.

9. Motoréducteur selon au moins l'une des revendications précédentes,
**caractérisé par le fait que**
la partie (1) formant carter est réalisée avec une asymétrie telle que le plan (42) dont la direction normale est orientée parallèlement à l'axe de rotation du premier arbre intermédiaire (20), et qui contient l'axe de rotation de l'arbre d'entrée, ne soit pas un plan de symétrie.

10. Motoréducteur selon au moins l'une des revendications précédentes,
**caractérisé par le fait que**
la partie (1) formant carter est réalisée avec une asymétrie telle que la partie dentée (21), en particulier la roue dentée reliée avec verrouillage rotatif à un arbre de sortie de l'engrenage, soit située à distance du plan,
sachant notamment que le volume de la zone d'espace intérieur de l'engrenage occupe, du côté du plan pointant vers la partie dentée (21), une plus grande part que du côté dudit plan qui pointe à l'opposé de ladite partie dentée (21).

11. Motoréducteur selon la revendication 10,
**caractérisé par le fait que**
l'arbre de sortie (5) est agencé avec accessibilité axiale de part et d'autre, ledit arbre de sortie (5) étant notamment réalisé sous la forme d'un arbre creux.

12. Motoréducteur selon au moins l'une des revendications précédentes,
**caractérisé par le fait que**
la partie (1) formant carter est produite en tant que pièce en aluminium coulée sous pression.

13. Motoréducteur selon au moins l'une des revendications précédentes,
**caractérisé par le fait que**
la partie (1) formant carter présente, axialement de part et d'autre de l'arbre de sortie, le même interface mécanique pour une charge devant être entraînée par l'engrenage, notamment par ledit arbre de sortie,
à savoir, en particulier, qu'un premier interface est présent sur la partie (1) formant carter, en vue de la liaison avec une charge devant être entraînée par la région extrême axiale antérieure de l'arbre de sortie, et qu'un premier interface est présent sur la partie (1) formant carter, en vue de la liaison avec une charge devant être entraînée par la région extrême axiale antérieure de l'arbre de sortie, et qu'un second interface est présent sur ladite partie (1) formant carter, en vue de la liaison avec une charge devant être entraînée par la région extrême axiale postérieure dudit arbre de sortie, le premier interface étant identique au second interface,
sachant que l'interface comporte, à chaque fois, un gabarit de perçage situé sur la partie (1) formant carter et un moyen de centrage implanté sur ladite partie (1) formant carter.
